# EUROPEAN PATENT APPLICATION

(11) **EP 1 569 454 A2**
(43) Date of publication of application: **31.08.2005**
(21) Application number: 05001292.1
(22) Date of filing: 22.01.2005
(51) Int. Cl.: H04N 7/18

(54) **A two-wire video door phone system**

(30) Priority: 10.02.2004 IT TO20040064
(71) Applicant: Urmet Domus S.p.A., 10154 Torino (IT)
(72) Inventor: Cubito, Dario, 10072 Caselle Torinese (TO) (IT)
(74) Representative: Spandonari, Carlo

(57) **Abstract**

A plurality of indoor stations, provided with microphones, loudspeakers and monitors, are connected to an outdoor station, provided with a microphone, a loudspeaker and a videocamera, via two-wire lines maintained under d.c. voltage by a power supply. Each station draws the d.c. voltage for the supply of its circuits from the line. The video signal generated by the camera is fed to the line in the baseband, and is used for driving the monitors directly, while the audio signals are fed to the line after modulation on a carrier. Digital signals such as identification codes for the indoor stations, service-activation codes, and the like, are transmitted during the line blanking periods of the video signal.

## Description

This invention is concerned with a two-wire video door phone system, for communication between one or more outdoor calling stations and a number of indoor stations, the former being typically located near a main gate of a building, the latter being located in respective apartments in the building.

Two-wire door phones systems have increasingly replaced conventional systems, both for installation in new medium-sized apartment buildings and when restructuring old buildings, because of several advantages, such as the fact that they use thin, easy-to-lay cables, and that they are more quickly and easily installable, even by persons with limited skill. On the other hand, their maximum communication distances cannot exceed about a hundred meters.

Such door phone systems, which were originally only provided with audio functions, have been later provided with a video function, whereby the video signal is AM or FM modulated on a carrier frequency, while the audio signal and the data signal are transmitted in the baseband. However, the quality of the resulting video in two-wire video door phones is usually low, although the costs are often considerable. In fact, where the carrier is a high frequency (say of about 40 MHz, according to a known proposal), the cable attenuation is considerable, and necessitates the use of expensive, high-gain demodulators, although the signal-to-noise ratio is low. If, on the other hand, a low-frequency carrier is used (e.g. at 3.5 MHz, according to another known proposal) the bandwidth of the video signal turns out to be limited to about 3 MHz, and therefore the definition is much lower than the standard definition with 5 MHz, without the ability to transmit color, because the color burst (at 4.443 MHz) turns out to be outside the band. Other problems are due to non-uniform attenuation with respect to frequency.

The invention has now the object to provide a two-wire video door phone system which avoids the above drawbacks of the prior art, and which, more particularly, provides a higher-quality video transmission over longer distances, over a common two-wire line with moderate costs.

Another object is to provide the above system with video transmission in color.

The invention achieves the above and other objects and advantages, such as will appear from the following disclosure, by a two-wire video door phone system having the features recited in claim 1.

A few preferred embodiments of the invention are described below, with reference to the attached drawings, wherein:
Fig. 1 is a general diagram of a video door phone system according to a first preferred embodiment of the invention;
Fig. 2 is block diagram of an outdoor station belonging to the system of Fig. 1;
Fig. 3 is block diagram of an indoor station belonging to the system of Fig. 1;
Fig. 4 is a general diagram of a video door phone system according to a second preferred embodiment of the invention;
Fig. 5 is a diagram of a further improvement of the system according to the invention.

According to the invention, in a two-wire video door phone system the video signal is input to a two-wire line in the baseband, while the audio signal is modulated onto a carrier frequency above the video band, preferably in frequency-modulation. The two-wire line is preferably non-polarized. The differential signals are transmitted in differential form for better protection from noise. The line is supplied with d.c. voltage from a single supply, and the linked stations derive their own supply from the line itself. Digital data, mainly the calling codes from an outdoor station to an indoor station, are transmitted as pulses overlying the video signal during the blanking lines of each half-frame.

More particularly, according to a preferred embodiment of the invention, the video signal is transmitted in the band 50 Hz to 5 MHz, while the audio signal is FM-modulated on two channels, say at 5 MHz and 6 MHz, for the transmission from an outdoor station to an indoor station and for the transmission from an indoor station to an outdoor station, respectively. The modulation depth may be 15 kHz. As far as digital data is concerned, one bit is preferably transmitted in each video line, for a maximum amount of 18 bits per half-frame (the latter being the number of available blanking lines).

As will be apparent for a person skilled in the art, the transmission of video in the baseband ensures a good quality of the image both in black-and-white and in color, and moreover, it enables transmission of the signal up to distances of the order of 200 meters without the necessity for a signal regenerator inserted along the line. As far as audio is concerned, since the modulating frequency of the audio signal (preferably 10 kHz) is much lower than the carrier, the line attenuation may be regarded in practice as substantially uniform in the resulting frequency range, and therefore the audio transmission is also good.

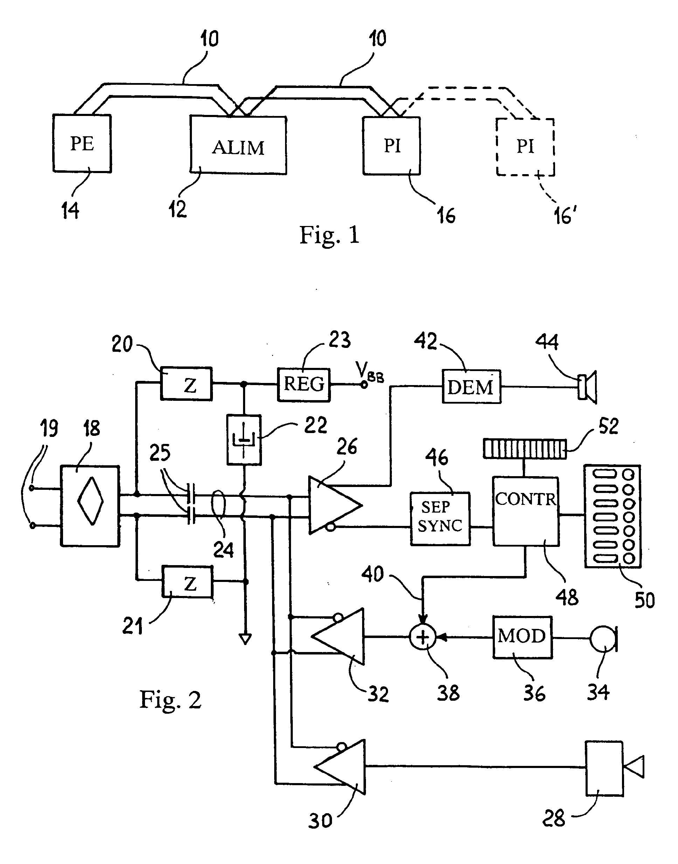

With reference to Fig. 1, a simple video door phone system according to the principles of the invention is described below. A two-wire line 10 is maintained under d.c. voltage by a power supply 12, e.g. at 36 volts. Line 10 is connected, at one end, to an outdoor calling station 14 (described below) and, at the other end, to one or more indoor stations such as 16, 16', in cascade.

Fig. 2 diagrammatically shows outdoor calling station 14. A rectifier bridge 18 picks up the balanced voltage from line 10 (not shown) through its input terminals 19, rectifies it and applies it to a low-pass filter comprising two inductances 20, 21 and a large capacitor 22 in shunt-connection. The filtered voltage is applied to a regulator 23 which derives from it a regulated supply voltage V_{BB} for all the internal circuits of the stations. Preferably, inductances 20, 21 are simulated by electronic means, for a smaller bulk, in a way known per se.

The output voltage from the diode bridge 18, which also carries the composite video-audio-data signal in differential form, is also applied to a pair of wires 24 leading to an input differential amplifier 26 for the signal circuits of station 14 (as further described below), via capacitors 25 for cutting the low frequency, which convey downstream only the composite signal, in differential format

Wires 24 also carry the video signal generated by a video camera 28 and converted to a balanced format by a differential inserter 30, the video signal thus being superposed to the signal coming from line 10. Wires 24 also carry the output signal from a further differential inserter 32, which receives the audio signal coming from a microphone 34 and modulated on a 5-MHz carrier in an FM modulator 36. Moreover, an adder 38 at the input of differential inserter 32 adds to the modulated audio signal a data signal available on line 40 and further described below.

Consequently, wires 24 carry a composite signal comprising a baseband video signal, a first audio signal modulated on a 6-MHz carrier and coming from diode bridge 18, a second audio signal modulated on a 5-MHz carrier and coming from microphone 34, and a data signal. The sum total of these signals is applied, on the one hand, to diode bridge 18 for transmission along the two-wire line 10 of Fig. 1, and, on the other hand, to the input of differential amplifier 26.

The composite signal, after being amplified in differential amplifier 26, is applied to an audio demodulator 42 which demodulates the first audio signal from its 6-MHz carrier (as further described below) and applies it to a loudspeaker 44.

A second output of differential amplifier 26 is applied to a circuit 46 separating the video synchs, known per se, which detects the synchronizing pulses in the video component of the composite signal applied to it and delivers respective timing signals to an input of a microcontroller 48.

Microcontroller 48 also receives signals generated by a calling pushbutton panel 50, and is able to read the settings of a bank of dip switches 52. The microcontroller generates digital data according to a predetermined program, and emits output pulses onto a a line 40, so that the pulses will be inserted in the video signal via adder 38. In order to avoid interferences with the other signals, the output pulses from microcontroller 48 are emitted at the line frequency of the video signal, in synchronism with the timing pulses received by the synch separator 46, so that they are located in the half-frame blanking period of the video signal, as mentioned above. The data signal will therefore disturb neither the two audio signals (because it is outside their frequency bands), nor the video signal (because it is hidden in the blanking periods, similarly to videotext in a conventional TV signal).

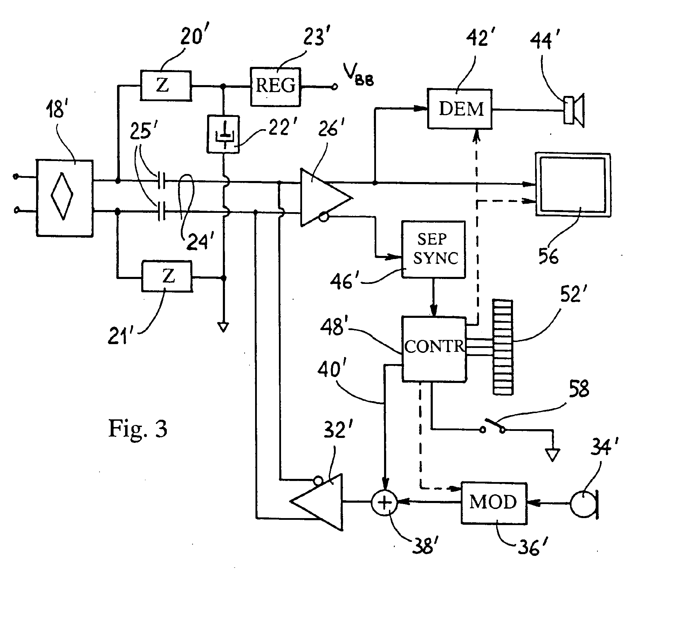

The structure of indoor station 16 will now be described with reference to Fig. 3. Indoor station 16 comprises a number of components similar to the outdoor station, and such components have been given reference numbers identical to references of Fig. 2, but provided with primes.

The indoor station comprises a diode bridge 18' supplying a low-pass filter consisting of two inductances 20', 21' and of a capacitor 22', as well as a voltage regulator 23' for the supply of the local circuits of the indoor station. The alternate voltage prevailing on line 10 is also transferred to a pair of wires 24' via capacitors 25' cutting the d.c. voltage. A differential amplifier 26' drives a demodulator 42' for demodulating the audio signal from a 5-MHz carrier and for playing it on a loudspeaker 44'. The same signal is also directly applied to the video buffer of a monitor 56 for displaying the video image. An output signal from the differential amplifier 26' goes to a video-synch separator circuit 46', from which an output goes to a microcontroller 48' in order to provide it with a timing signal (similarly to circuit 46 of Fig. 2) and also to deliver to the microcontroller the pulses making up the data signal.

Microcontroller 48' is connected for reading a bank of dip switches 52' which are set with an identification code for the particular indoor station, and, after reconstructing the code transmitted from the outdoor station, it will compare it with the code programmed in dip switches 52', in order to establish whether a given call is addressed to its own indoor station or not. Moreover, the microcontroller is connected for detecting that one of its inputs has been activated by closing a pushbutton switch, which can be pressed by the user as a door or gate opening command. Finally, microcontroller 48', similarly to microcontroller 48 of Fig. 2, is programmed for emitting output pulses on a line 40', in synchronism with the video signal blanking periods, so that the pulses, via adder 38', are transformed to a differential format by differential inserter 32' and thereby reach wires 24', as already described for the outdoor station.

Indoor station 16 further comprises a microphone 34' with modulator 36', which generate a carrier modulated at 6 MHz, which is also sent to adder 38'.

Microcontroller 48' is programmed so that, when it recognizes its own identification code in the data signals coming from synch separator 46', it will enable demodulator 42', modulator 36' and monitor 56 (as shown by dashed lines). Moreover, when the microcontroller detects the closure of gate-unlocking pushbutton 58, it will send a string on line 40', which is received by the outdoor station and decoded as a command signal for unlocking the gate.

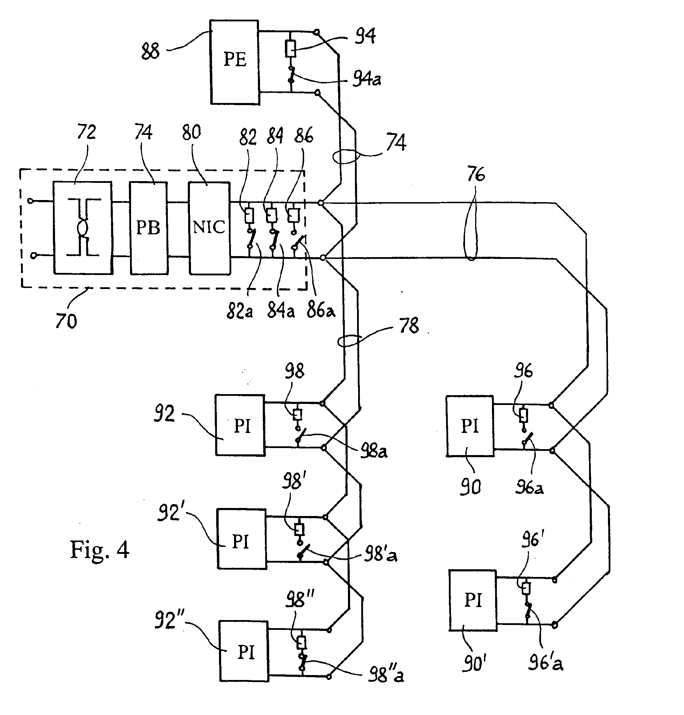

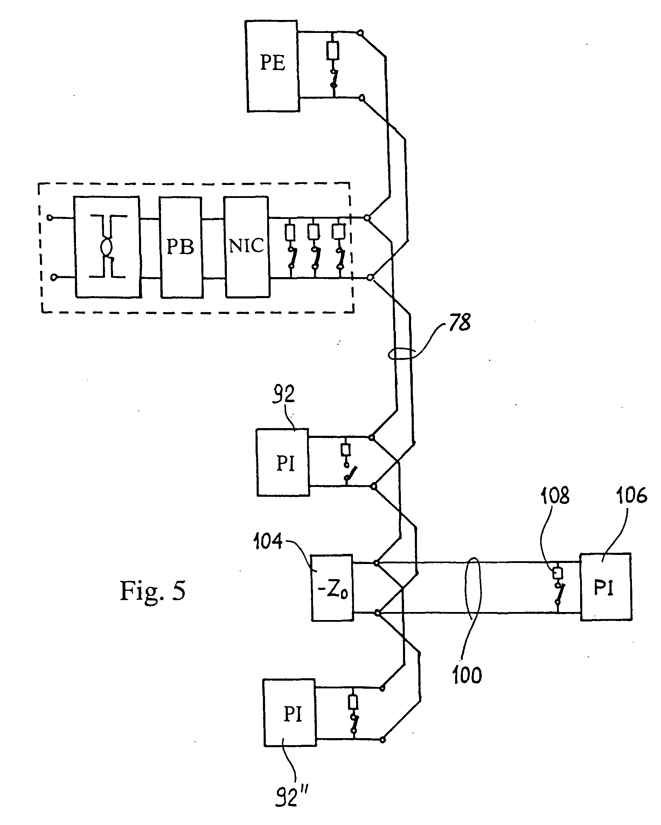

The video door phone system according to the invention can be implemented with network connections more complex than shown on Figs. 1 to 3, by supplying a plurality of branches from a single power supply. However, as a person skilled in the art will readily appreciate, it is necessary in this case to enact devices in order to avoid that the parallel connection of several transmission lines will create mismatches in the line impedance, with consequent reflexions of the signal. The invention therefore provides an improvement which will allow the line to be matched under any circumstances, in a way that is easy and immediate for the installer, and how described below with reference to Figs. 4 and 5.

In Fig. 4, a two-wire video door phone system comprises a power supply 70 in which a transformer-rectifier unit 72, supplied by the mains, delivers a rectified and stabilized, non-polarized voltage, e.g. at 36 V, through a low-pass filter 74, to a negative impedance converter 80 (known as NIC) at whose output three impedances 82, 84, 86 may be switched on and off in parallel, by means of respective switches 82a, 84a, 86a (although the number of taps may of course also be four, five, or more).

Each of impedances 82, 84, 86 has a resistive value corresponding to the characteristic impedance Zo of propagation along the line (typically 100 ohm). Depending on how many switches 82a, 84a, 86a are closed, i.e. how many impedances 82, 84, 86 are switched in parallel, negative impedances of value -Z₀, -Z₀/2, -Z₀/3, ∞ can be obtained.

NIC circuits for simulating negative impedances are known in the art, and are described, for instance, in Makoto Itoh, *Synthesis of Electronic Circuits for Simulating Linear Dynamics,* International Journal of Bifurcation and Chaos, Vol. 11, No. 3 (2001) 605-653, and it is therefore regarded as unnecessary to describe them in more detail.

Three two-wire lines 74, 76, 78 are star-connected to the output terminals of power supply 70. Line 74 leads to an outdoor station 88 similar to station 14 of Fig. 1. Line 76 leads to two indoor stations 90, 90', similar to stations 16, 16' of Fig. 1. Line 78 leads to a plurality of indoor stations 92, 92', 92" of the same type. In parallel to each outdoor or indoor station 88, 90, 90', 92, 92', 92" is connected an impedance 94, 96, 96', 98, 98', 98", having a value Zo, each having an associated series switch such as 94a, 96a, etc.

In order to match the line impedance, the installer makes the required connections, leaving all the switches open for the outdoor or indoor stations, except the switch for the station closing the corresponding line branch, which should be closed in order to correctly terminate the line with its own characteristic impedance Z₀. Moreover, in order to correctly terminate the line on the supply side, the installer will open a number of switches 82a, 84a, 86a equal to the number of connected supplementary taps, leaving the other switches closed. This step will build, due to the conversion made by the NIC unit 80, a negative impedance value such that it will compensate the mismatch that would otherwise arise among the three lines.

In this way, for instance, several door phone lines from different stories of a building can be easily joined and supplied from a single power supply, which also acts as a connection node among the lines.

Fig. 5 shows a variation on the diagram of Fig. 4, where line 78 leads to a further branched line 100. According to the teachings of the invention, it is possible to maintain matching also for this branched-off line, so that signal reflections are avoided. As shown on Fig. 5, in the junction between a main line 78 and the branched-off line 100, which terminates on an indoor station 106 matched with an impedance 108, a respective negative impedance 104 is parallel-connected, having a value equal to the characteristic impedance Zo of the line, and comprising a NIC converter which draws its supply from the two-wire line, along the same concepts of separation between the impedance offered by the circuits to d.c. current and the impedance offered to signal frequencies.

More generally, according to the invention, each two-wire line in the system should be terminated at the start and at the end of the line, and at each derivation or node there should be a negative impedance such that it will compensate the mismatch that would otherwise arise from the reflections and attenuations caused by the branching.

A person skilled in the art will understand that the above described system separates the behavior of the several units in respect of the continuous supply, for which the input impedances are very low, from the the behavior in respect of the highfrequency audio-video-data signal (e.g. upwards of 10 Hz), for which the impedance for each unit is selected so that the line is matched at all times. Line matching also at forks and branches is made possible by using negative impedances.

Numerous changes may of course be made to the preferred embodiments described above, both in respect of design parameters, given purely as an example, and in respect of choices made among known technologies. For instance, the audio signal, rather than being FM-modulated, might be modulated in AM or by another standard. Also, the preferred embodiments described above might be provided with further accessory functions, such as control of ambient lighting by the outdoor station, or the possibility for an indoor station to call another indoor station, etc.

## Claims

1. A two-wire video door phone system, in which a plurality of indoor stations, provided with respective microphones, loudspeakers and monitors are connected to at least one outdoor station provided with a microphone, a loudspeaker and a videocamera, via two-wire lines maintained under d.c. voltage by a power supply,
**characterized in that**:
the outdoor station comprises:
- first circuit means for: inputting to the line a composite signal made by superposition of a baseband video signal generated by the videocamera, a first audio carrier modulated with a signal generated by the outdoor station's microphone, and digital codes formed as pulses located in the line blanking periods of the video signal; demodulating an audio signal from a second audio carrier received as alternate voltage from the line and applying it to the outdoor station's loudspeaker; and detecting identification digital codes identifying indoor stations in the signal received from the line;
- a first voltage regulator connected for picking up from the line the d.c. voltage for supplying said first circuit means;
and **in that** the indoor station comprises:
- second circuit means for: inputting to the line a second audio carrier modulated with a signal generated by the indoor station's microphone and digital codes formed as pulses located in the line blanking periods of the video signal; applying the baseband video signal received from the line directly to the indoor station's monitor; demodulating an audio signal from said first audio carrier and applying it to the indoor station's loudspeaker; and detecting digital codes in the signal received from the line;
- a second voltage regulator connected for picking up from the line the d.c. voltage for supplying said second circuit means.

2. The video door phone system of claim 1, comprising a plurality of said indoor stations, **characterized in that**:
- the outdoor station further comprises a calling pushbutton panel for generation of said identification digital codes identifying individual indoor stations, and said first circuit means further comprise first control means for receiving said codes from the pushbutton panel and for adding the codes to said composite signal as pulses overlying the video signal during its line blanking periods; and
- the second circuit means of each indoor station further comprise respective second control means for detecting said digital codes in the composite signal received from the line and for comparing them with an identification code characteristic of the respective indoor station and for enabling said monitor, said microphone and said loudspeaker in case of correspondence.

3. The video door phone system of claim 2, **characterized in that** said outdoor and indoor stations further comprise respective circuits for separating video synchs from said composite signal, the separating circuits being connected to the respective first and second control means for synchronizing them with the video signal.

4. The video door phone system of any of claims 1 to 3, **characterized in that** the second control means of each of the indoor stations are also equipped for generating a gate-unlocking command code and for transmitting it in form of pulses synchronized with the line blanking periods of the video signal transmitted by the outdoor station, upon issue of a gate-unlocking command by a user of said indoor station.

5. The video door phone system of any of claims 1 to 4, **characterized in that** the composite signal transmitted by the outdoor station and the signals transmitted by the indoor stations are balanced differential signals.

6. The video door phone system of claim 5, **characterized in that** both the outdoor stations and the indoor stations are connected to the two-wire line through diode bridges, whereby the connection is non-polarized.

7. The video door phone system of any of claims 1 to 6, **characterized in that** the audio signal is FM-modulated.

8. The video door phone system of any of claims 1 to 7, **characterized in that** the respective voltage regulators in each of said outdoor and indoor stations are connected to the two-wire line through respective low-pass filter means.

9. The video door phone system of claim 8, **characterized in that** said low-pass filter means comprise inductive means series-connected to the respective regulator.

10. The video door phone system of claim 9, **characterized in that** said inductive means are inductances simulated by electronic components.

11. The video door phone system of any of claims 1 to 10, **characterized in that** a plurality of two-wire lines are star-connected to the power supply, along which lines a plurality of indoor and/or outdoor stations are connected at intervals, the station farthest from the supply in each two-wire line having an impedance connected across its terminals, with a value equal to the characteristic impedance of the line, and **in that** across the output terminals of the supply are connected circuit means simulating a negative impedance of a value equal to the characteristic impedance of the line divided by the number of lines connected to it in excess of two.

12. The video door phone system of claim 11, **characterized in that** said circuit means simulating a negative impedance comprise a NIC circuit across which is connected a resistive impedance of a desired value.

13. The video door phone system of claim 12, **characterized in that** a plurality of units, each comprising the series connection of a switch and a resistor having a value equal to the characteristic impedance of the two-wire line are connected in parallel to said NIC circuit, whereby said desired impedance is obtainable by closing an arbitrary number of said switches.

14. The video door phone system of any of claims 1 to 13, wherein the two-wire line has at least one branch leading to an indoor station, **characterized in that** across the connection terminals of said branch are connected further circuit means simulating a negative impedance of a value equal to the characteristic impedance of the branched line.

15. The video door phone system of claim 14, **characterized in that** said further circuit means simulating a negative impedance comprise a NIC circuit across which is connected a resistive impedance having a value equal to the characteristic impedance of the branched line.
